# EUROPEAN PATENT APPLICATION

(11) **EP 1 673 986 A2**
(43) Date of publication of application: **28.06.2006**
(21) Application number: 05008078.7
(22) Date of filing: 13.04.2005
(51) Int. Cl.: A23L 1/236, A23L 1/305

(54) **Collagen-containing food and drink**

(30) Priority: 27.12.2004 JP 2004378308
(71) Applicant: LOTTE CO., LTD, Shinjuku-ku Tokyo (JP)
(72) Inventor: Takemori, Toshio Lotte Co., Ltd., Hyakunin-cho, Shinjuku-ku Tokyo 169-0073 (JP); Yasuda, Hideyuki Lotte Co., Ltd., Hyakunin-cho, Shinjuku-ku Tokyo 169-0073 (JP); Mitsui, Makoto Lotte Co., Ltd., Hyakunin-cho, Shinjuku-ku Tokyo 169-0073 (JP); Shimizu, Hidaka Lotte Co., Ltd., Hyakunin-cho, Shinjuku-ku Tokyo 169-0073 (JP)
(74) Representative: Westendorp, Michael Oliver

(57) **Abstract**

A collagen-containing food and drink, in which the taste inherent in collagen is significantly improved is provided. The taste is improved by containing sucralose and stevia extract.

## Description

### BACKGROUND OF THE INVENTION

### 1. Field of the invention

The present invention relates to a collagen-containing food and drink whose taste is improved, and particularly to a collagen-containing food and drink whose taste is improved by containing sucralose and stevia extract therein.

### 2. Description of the Related Art

Collagen is a fibrous protein existing in connective tissues of humans and animals. Lots of collagen exist in skin, bone, tendons, blood vessel walls and the like, in which the connective tissues group together, and serve as skeletons in cells. It is thought that aging of skin or hairs and diseases of bone or joints are caused by aging of collagen and lowering of synthesizing collagen.

Therefore, many health foods aiming at various positive effects characterized in that collagen is contained are available in the market. However, collagen has a distinctive caprylic taste. Further, collagen easily reacts to acidic polysaccharides or tannins often contained in foods, is precipitated, and becomes clouded. Therefore, blending a great deal of collagen to the degree at which performance of the various positive effects can be expected has been difficult.

A food and drink, to which a collagen peptide obtained by hydrolyzing collagen is added as collagen in order to decrease such reaction to acidic polysaccharides or tannins is known (for example, refer to Japanese Laid-open Patent Publication No. 2002-51734). However, in such a food and drink, there is still room for improvement on the taste. Therefore, a collagen-containing food and drink, in which the collagen taste is improved has been aspired.

### SUMMARY OF THE INVENTION

It is an object to be achieved in the present invention to provide a collagen-containing food and drink whose taste is improved.

The inventors have devoted themselves to examine methods for improving the taste of the collagen-containing food and drink. In result, the inventors have found that the collagen taste is improved by blending sucralose and stevia extract, and the collagen taste is significantly improved by further blending acesulfame potassium in addition to sucralose and stevia extract, and accomplished the present invention.

By blending sucralose and stevia extract into the collagen-containing food and drink, desirably further blending acesulfame potassium, the collagen taste can be significantly improved.

### DETAILED DESCRIPTION OF THE PREFERRED EMBODIMENTS

The present invention is hereinafter described in detail.

Collagen used in the present invention can be a commercial item. Otherwise, extract obtained by heating bone, skin and the like of animals can be used as collagen.

Further, low molecular weight substance obtained by decomposing collagen by enzyme treatment, for example, a collagen peptide can be used. The low molecular weight collagen peptide is more preferable, since the low molecular weight collagen peptide is hard to react to acidic polysaccharides or tannins often used in a food and drink, be precipitated and become clouded, compared to non low molecular weight collagen. The collagen peptide is obtained by hydrolyzing gelatin by enzyme or acid. Collagen peptides having about 700 to 20000 molecular weight are commercially available. In the present invention, any collagen peptide having any value of molecular weight can be used.

As a food and drink in the present invention, in addition to liquid beverages, gelatinous foods such as jelly, solid foods, frozen foods obtained by freezing liquid can be cited.

A blending amount of collagen with the food and drink is not particularly limited, but is preferably 2 to 30% in order to realize positive effects. In the case of the liquid beverage, problems such as increased viscosity may occur, when the blending amount is larger than 30%.

Stevia extract used in the present invention is extract of leaf parts of stevia rebaudiana bertoni, an oxeye. Stevioside and rebaudiside, primary components thereof are known as a high sweetener.

Sucralose used in the present invention is a synthetic sweetener, which is in a state of white powders, easily soluble in water, and expresses sweetness about 600 times saccharose.

Acesulfame potassium used in the present invention is a synthetic sweetener, which is in a state of white crystalline powders, easily soluble in water, and expresses sweetness about 200 times saccharose.

In the present invention, a blending amount of sucralose into the collagen-containing food and drink is preferably 0.002 to 0.006 wt%, and a blending amount of stevia extract into the collagen-containing food and drink is preferably 0.004 to 0.012 wt%. By using this blending, the taste inherent in collagen in the collagen-containing food and drink is decreased. Further, in the case that the collagen-containing food and drink is particularly a beverage and the taste inherent in collagen is particularly annoying, the taste inherent in collagen is significantly decreased by further blending acesulfame potassium preferably at an amount of 0.005 to 0.02 wt%.

In stevia extract, a ratio between stevioside and rebaudiside contained in stevia extract is preferably 1:0.5 to 2. In this range, effects of decreasing the collagen taste are further improved.

Further, when 0.1 to 1.0 wt% of a flavor is further contained in the foregoing collagen-containing food and drink, effects of decreasing the collagen taste is improved. As a flavor, a peach flavor is particularly preferable.

Further, when vitamin C is further contained in the foregoing collagen-containing food and drink at an amount of 0.1 wt% or more, for example, 0.1 to 20 wt%, or preferably at an amount of 0.5 wt% or more, for example, 0.5 to 10 wt%, oxidization of blending components including collagen is inhibited, effects of improving the taste is improved and maintained. However, when the blending amount of vitamin C exceeds 10 wt%, the acid taste becomes strong. Meanwhile, when the blending amount of vitamin C is 20 wt% or more, the aptitude as a food and drink is decreased.

The present invention will be hereinafter described in detail with reference to test examples. However, these test examples do not limit the scope of the invention.

### (Test example 1)

This test was performed for examining effects of a ratio of stevioside and rebaudiside in stevia extract in a collagen food and drink containing acesulfame potassium, sucralose, and stevia extract on reducing the collagen taste.

### (1) Preparation of samples

### [Sample 1]

A stevia mixture A adjusted so that the sweetness became 200 times sugar per 1 parts by mass by mixing stevioside and rebaudiside in stevia extract at a ratio of 1:1 parts by mass was prepared.

5 g of a collagen peptide, 0.005 g of sucralose, 0.01 g of the stevia mixture A, and 0.01 g of acesulfame potassium were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### [Sample 2]

A stevia mixture B adjusted so that the sweetness became 200 times sugar per 1 parts by mass by mixing stevioside and rebaudiside in stevia extract at a ratio of 1:0.3 parts by mass was prepared.

5 g of a collagen peptide, 0.005 g of sucralose, 0.01 g of the stevia mixture B, and 0.01 g of acesulfame potassium were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### [Sample 3]

A stevia mixture C adjusted so that the sweetness became 200 times sugar per 1 parts by mass by mixing stevioside and rebaudiside in stevia extract at a ratio of 1:2.5 parts by mass was prepared.

5 g of a collagen peptide, 0.005 g of sucralose, 0.01 g of the stevia mixture C, and 0.01 g of acesulfame potassium were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### (2) Test method

A dosing characteristics test of the samples was performed by a trained professional panel. Each sample was provided at 5°C. The dosing characteristics test was performed by the following method. 10 ml of the sample was separated, evaluation on the taste was made after dosing. After evaluating one sample solution, the panel rinsed out the mouth with warm water. After 30 minutes or more went by, the next sample solution was dosed. Evaluation of dosing characteristics shall be based on the following criteria. That is, evaluation was made on a descending scale of 1 to 4 of ⓞ (very good), ○ (good), Δ (not good), and × (bad) in the order from high effects of decreasing the collagen taste. The evaluation results are shown together with blending components in Table 1.

### (3) Test results

As shown in Table 1, effects of decreasing the collagen taste were confirmed in all the samples 1 to 3. In particular, effects of the sample 1 were strongly confirmed.

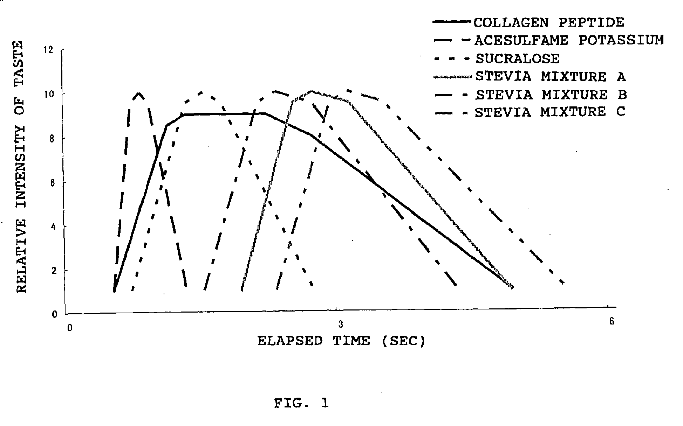

Such difference can be explained by time lapse of taste expression of collagen and each sweetener shown in FIG. 1. In the sample 1, expression time of each sweetener and overlapping degrees between each sweetener were expressed overall. Therefore, sweetness was expressed so that the collagen taste was sufficiently masked.

Meanwhile, in the sample 2, sweetness expression time of the stevia mixture was early. Therefore, sweetness in the region where the stevia mixture and sucralose were overlapped with each other was too strong. Further, sweetness was extinguished early. In result, masking effects on aftertaste of collagen was slightly weak.

Further, in the sample 3, expression time of the stevia mixture C was too late. Therefore, collagen odor was slightly emitted in the vicinity of the intermediate term. In addition, nasty aftertaste inherent in sweeteners stayed in the mouth.

**(Table 1) Test results 1**

| | Sample 2 | Sample 1 | Sample 3 |
|---|---|---|---|
| Collagen peptide | 5 | 5 | 5 |
| Sucralose | 0.005 | 0.005 | 0.005 |
| Stevia extract | 0.01 | 0.01 | 0.01 |
| (stevioside:rebaudiside) | (1:0.3) | (1:1) | (1:2.5) |
| Acesulfame potassium | 0.01 | 0.01 | 0.01 |
| Sensory evaluation | ○ | ○~ⓞ | ○ |

| | | | |
|---|---|---|---|
| Sensory evaluation: Effects of reducing the collagen taste were evaluated. | | | |
| ⓞ: very good, ○: good, Δ: not good, and ×: bad | | | |

### (Test example 2)

This test was performed for examining effects of acesulfame potassium, sucralose, stevia extract, and a peach flavor on reducing the collagen taste in a collagen food and drink.

### (1) Preparation of samples

### [Sample 4]

5 g of a collagen peptide, 0.005 g of sucralose, 0.01 g of the stevia mixture A, 0.01 g of acesulfame potassium, and 0.5 g of a peach flavor were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### [Sample 5]

5 g of a collagen peptide, 0.005 g of sucralose, 0.01 g of the stevia mixture A, and 0.5 g of a peach flavor were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### [Sample 6]

5 g of a collagen peptide, 0.005 g of sucralose, and 0.01 g of the stevia mixture A were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### [Sample 7]

5 g of a collagen peptide, 0.005 g of sucralose, 0.01 g of the stevia mixture A, 0.01 g of acesulfame potassium, 0.5 g of a peach flavor, and 0.5 g of a gelatinizing stabilizer were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test jelly.

### [Comparative sample 1]

5 g of a collagen peptide, 0.01 g of the stevia mixture A, 0.01 g of acesulfame potassium, and 0.5 g of a peach flavor were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### [Comparative sample 2]

5 g of a collagen peptide, 0.005 g of sucralose, 0.01 g of acesulfame potassium, and 0.5 g of a peach flavor were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### [Comparative sample 3]

5 g of a collagen peptide was mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### (2) Test method

A dosing characteristics test of the samples was performed by a trained professional panel. In addition to the foregoing samples 4 to 7 and the comparative samples 1 to 3, the sample 1 prepared in Test example 1 was targeted for examination. Each sample was provided at 5°C.. The dosing characteristics test was performed by the following method. 10 ml of the sample was separated, evaluation on the taste was made after dosing. After evaluating one sample solution, the panel rinsed out the mouth with warm water. After 30 minutes or more went by, the next sample solution was dosed. Evaluation of dosing characteristics shall be based on the following criteria. That is, evaluation was made on a descending scale of 1 to 4 of ⓞ (very good), ○ (good), Δ (not good), and ×(bad) in the order from high effects of decreasing the collagen taste. The evaluation results are shown together with blending components in Table 2.

### (3) Test results

As shown in Table 2, by combining sucralose and the stevia mixture A with the collagen peptide as in the sample 6, the taste and odor inherent in collagen could be decreased. Further, by using acesulfame potassium and the peach flavor together as in the samples 1, 4, and 5, improvement of decreasing effects was confirmed. Further, in the sample 7 using the gelatinizing stabilizer, similar effects were confirmed.

Meanwhile, in the comparative samples 1 to 3, decreasing effects were not sufficient.

**(Table 2) Test results 2**

| | Sample 1 | Sample 4 | Sample 5 | Sample 6 | Sample 7 | Comparative sample 1 | Comparative sample 2 | Comparative sample 3 |
|---|---|---|---|---|---|---|---|---|
| Collagen peptide | 5 | 5 | 5 | 5 | 5 | 5 | 5 | 5 |
| Sucralose | 0.005 | 0.005 | 0.005 | 0.005 | 0.005 | | 0.005 | |
| Stevia extract | 0.01 | 0.01 | 0.01 | 0.01 | 0.01 | 0.01 | | |
| (stevioside: rebaudiside) | 1:1 | 1:1 | 1:1 | 1:1 | 1:1 | 1:1 | | |
| Acesulfame potassium | 0.01 | 0.01 | | | 0.01 | 0.01 | 0.01 | |
| Peach flavor | | 0.5 | 0.5 | | 0.5 | 0.5 | 0.5 | |
| Gelatinizing stabilizer | | | | | 0.5 | | | |
| Sensory evaluation | ○~ⓞ | ⓞ | ○~ⓞ | ○ | ⓞ | ○~△ | △ | × |

| | | | | | | | | |
|---|---|---|---|---|---|---|---|---|
| Sensory evaluation: Effects of reducing the collagen taste were evaluated. | | | | | | | | |
| ⓞ: very good, ○: good, Δ: not good, and ×: bad | | | | | | | | |

### (Test example 3)

This test was performed diachronically for examining effects of vitamin C on durability of effects of improving the taste of a collagen-containing food and drink.

### (1) Preparation of samples

### [Sample 8]

5 g of a collagen peptide, 0.005 g of sucralose, 0.01 g of the stevia mixture A, and 0.01 g of acesulfame potassium, 0.5 g of a peach flavor, and 0.5 g of vitamin C were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### [Sample 9]

5 g of a collagen peptide, 0.005 g of sucralose, 0.01 g of the stevia mixture A, and 0.01 g of acesulfame potassium, 0.5 g of a peach flavor, and 5 g of vitamin C were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### [Sample 10]

5 g of a collagen peptide, 0.005 g of sucralose, 0.01 g of the stevia mixture A, and 0.01 g of acesulfame potassium, 0.5 g of a peach flavor, and 0.05 g of vitamin C were mixed and dissolved in purified water. After that, the mixture was adjusted to pH 3.8 by using an acidifier. Then, purified water was further added to obtain 100 ml of an aqueous solution. This aqueous solution was sterilized at 85°C, filled in a container, and cooled to obtain a test beverage.

### (2) Diachronic test method

The samples 8 to 10 were kept under the environment of room temperatures (25°C±5°C) for 8 months. After 8 months, samples equivalent to the aged samples were newly prepared. Doping characteristics test of the samples was performed according to Test example 1. The aged samples and the new samples were compared respectively, and durability of effects of improving the taste was examined.

### (3) Test results

As shown in Table 3, in the case that 0.5 wt% or more of vitamin C was contained (samples 9 and 10), durability of effects of improving the taste was confirmed. However, in the sample 9, a trend was shown that the acidity was slightly strong. Meanwhile, in the sample 8, effects of improving the taste was not maintained, and the diachronic effects could not be maintained.

**(Table 3) Test results 3**

| | | Sample 8 | Sample 9 | Sample 10 |
|---|---|---|---|---|
| Collagen peptide | | 5 | 5 | 5 |
| Sucralose | | 0.005 | 0.005 | 0.005 |
| Stevia extract (stevioside:rebaudiside) | | 0.01 | 0.01 | 0.01 |
| | | 1:1 | 1:1 | 1:1 |
| Acesulfame potassium | | 0.01 | 0.01 | 0.01 |
| Peach flavor | | 0.5 | 0.5 | 0.5 |
| Vitamin C | | 0.05 | 0.5 | 5 |
| Sensory evaluation | | | | |
| | New sample | ⓞ | ⓞ | ○ |
| | 8-month aged samples | Δ | ⓞ~○ | ○ |

From the foregoing tests, it is evident that the taste in the food and drink of the present invention was improved.

Preferred embodiments of the present invention will be hereinafter described in detail with reference to examples. However, the present invention is not limited to the examples.

### (Example 1)

5 parts by mass of a collagen peptide, 0.005 parts by mass of sucralose, 0.01 parts by mass of a stevia mixture, and 0.01 parts by mass of acesulfame potassium were mixed and dissolved in purified water. After that, the mixture was adjusted to pH 3.8 by using an acidifier. Then, purified water was further added to obtain 100 parts by volume of an aqueous solution. The stevia mixture adjusted so that the sweetness became 200 times sugar per 1 parts by mass by mixing stevioside and rebaudiside at a ratio of 1:1 parts by mass was used. This aqueous solution was sterilized at 85 °C, filled in a container, and cooled to manufacture a collagen-containing beverage whose taste was improved.

### (Example 2)

5 parts by mass of a collagen peptide, 0.005 parts by mass of sucralose, 0.01 parts by mass of a stevia mixture, 0.01 parts by mass of acesulfame potassium, and 0.5 parts by mass of a peach flavor were mixed and dissolved in purified water. After that, the mixture was adjusted to pH 3.8 by using an acidifier. Then, purified water was further added to obtain 100 parts by volume of an aqueous solution. The stevia mixture previously adjusted so that the sweetness became 200 times sugar per 1 parts by mass by mixing stevioside and rebaudiside at a ratio of 1:1 parts by mass was used. This aqueous solution was sterilized at 85°C, filled in a container, and cooled to obtain a collagen-containing beverage whose taste was improved.

### (Example 3)

5 parts by mass of a collagen peptide, 0.005 parts by mass of sucralose, 0.01 parts by mass of a stevia mixture, and 0.5 parts by mass of a peach flavor were mixed and dissolved in purified water. After that, the mixture was adjusted to pH 3.8 by using an acidifier. Then, purified water was further added to obtain 100 parts by volume of an aqueous solution. The stevia mixture previously adjusted so that the sweetness became 200 times sugar per 1 parts by mass by mixing stevioside and rebaudiside at a ratio of 1:1 parts by mass was used. This aqueous solution was sterilized at 85 °C, filled in a container, and cooled to manufacture a collagen-containing beverage whose taste was improved.

### (Example 4)

5 parts by mass of a collagen peptide, 0.005 parts by mass of sucralose, and 0.01 parts by mass of a stevia mixture were mixed and dissolved in purified water. After that, the mixture was adjusted to pH 3.8 by using an acidifier. Then, purified water was further added to obtain 100 parts by volume of an aqueous solution. The stevia mixture previously adjusted so that the sweetness became 200 times sugar per 1 parts by mass by mixing stevioside and rebaudiside at a ratio of 1:1 parts by mass was used. This aqueous solution was sterilized at 85°C, filled in a container, and cooled to manufacture a collagen-containing beverage whose taste was improved.

### (Example 5)

5 parts by mass of a collagen peptide, 0.005 parts by mass of sucralose, 0.01 parts by mass of a stevia mixture, and 0.01 parts by mass of acesulfame potassium were mixed and dissolved in purified water. After that, the mixture was adjusted to pH 3.8 by using an acidifier. Then, purified water was further added to obtain 100 parts by volume of an aqueous solution. The stevia mixture previously adjusted so that the sweetness became 200 times sugar per 1 parts by mass by mixing stevioside and rebaudiside at a ratio of 1:0.3 parts by mass was used. This aqueous solution was sterilized at 85°C, filled in a container, and cooled to manufacture a collagen-containing beverage whose taste was improved.

### (Example 6)

5 parts by mass of a collagen peptide, 0.005 parts by mass of sucralose, 0.01 parts by mass of a stevia mixture, and 0.01 parts by mass of acesulfame potassium were mixed and dissolved in purified water. After that, the mixture was adjusted to pH 3.8 by using an acidifier. Then, purified water was further added to obtain 100 parts by volume of an aqueous solution. The stevia mixture previously adjusted so that the sweetness became 200 times sugar per 1 parts by mass by mixing stevioside and rebaudiside at a ratio of 1:2.5 parts by mass was used. This aqueous solution was sterilized at 85°C, filled in a container, and cooled to manufacture a collagen-containing beverage whose taste was improved.

### (Example 7)

5 parts by mass of a collagen peptide, 0.005 parts by mass of sucralose, 0.01 parts by mass of a stevia mixture, 0.01 parts by mass of acesulfame potassium, 0.5 parts by mass of a peach flavor, and 0.5 parts by mass of a gelatinizing stabilizer were mixed and dissolved in purified water. After that, the mixture was adjusted to pH 3.8 by using an acidifier. Then, purified water was further added to obtain 100 parts by volume of an aqueous solution. The stevia mixture previously adjusted so that the sweetness became 200 times sugar per 1 parts by mass by mixing stevioside and rebaudiside at a ratio of 1:1 parts by mass was used. This aqueous solution was sterilized at 85°C, filled in a container, and cooled to manufacture a collagen-containing jelly whose taste was improved.

### (Example 8)

5 parts by mass of a collagen peptide, 0.005 parts by mass of sucralose, 0.01 parts by mass of a stevia mixture, 0.01 parts by mass of acesulfame potassium, 0.5 parts by mass of a peach flavor, and 0.5 parts by mass of vitamin C were mixed and dissolved in purified water. After that, the mixture was adjusted to pH 3.8 by using an acidifier. Then, purified water was further added to obtain 100 parts by volume of an aqueous solution. The stevia mixture previously adjusted so that the sweetness became 200 times sugar per 1 parts by mass by mixing stevioside and rebaudiside at a ratio of 1:1 parts by mass was used. This aqueous solution was sterilized at 85 °C , filled in a container, and cooled to manufacture a collagen-containing beverage whose taste was improved.

### (Example 9)

5 parts by mass of a collagen peptide, 0.005 parts by mass of sucralose, 0.01 parts by mass of a stevia mixture, 0.01 parts by mass of acesulfame potassium, 0.5 parts by mass of a peach flavor, and 5 parts by mass of vitamin C were mixed and dissolved in purified water. After that, the mixture was adjusted to pH 3.8 by using an acidifier. Then, purified water was further added to obtain 100 parts by volume of an aqueous solution. The stevia mixture previously adjusted so that the sweetness became 200 times sugar per 1 parts by mass by mixing stevioside and rebaudiside at a ratio of 1:1 parts by mass was used. This aqueous solution was sterilized at 85 °C, filled in a container, and cooled to manufacture a collagen-containing beverage whose taste was improved.

### (Example 10)

A collagen-containing beverage whose taste was improved was manufactured as in Example 2, except that collagen (average molecular weight: 95,000) was used instead of the collagen peptide. In this beverage, slight precipitation was found and a tendency was shown that the viscosity was high. However, the beverage was sufficiently drinkable.

### BRIEF DESCRIPTION OF THE DRAWING

FIG. 1 is a graph diachronically showing conditions of taste expression of collagen and each sweetener.

## Claims

1. A collagen-containing food and drink whose taste is improved by containing sucralose and stevia extract.

2. The collagen-containing food and drink according to claim 1, wherein a content of sucralose is 0.002 to 0.006 wt%, and a content of stevia extract is 0.004 to 0.012 wt%.

3. The collagen-containing food and drink according to claim 1 or claim 2, further containing acesulfame potassium.

4. The collagen-containing food and drink according to claim 3, wherein a content of acesulfame potassium is 0.005 to 0.02 wt%.

5. The collagen-containing food and drink according to claims 1 to 4, further containing 0.1 to 1.0 wt% of a flavor.

6. The collagen-containing food and drink according to claims 1 to 5, which is a beverage.

7. The collagen-containing food and drink according to claims 1 to 6, wherein a ratio of stevioside and rebaudiside of the stevia extract is 1:0.5 to 2.

8. The collagen-containing food and drink according to claims 1 to 7, wherein a content of collagen is 2 to 30 wt%.

9. The collagen-containing food and drink according to claims 1 to 8, further containing 0.1 to 20 wt% of vitamin C.

10. The collagen-containing food and drink according to claims 1 to 9, further containing 0.5 to 10 wt% of vitamin C.

11. The collagen-containing food and drink according to claims 1 to 10, wherein collagen is a collagen peptide.
